# EUROPÄISCHE PATENTSCHRIFT

(11) **EP 0 682 590 B1**
(45) Veröffentlichungstag und Bekanntmachung des Hinweises auf die Patenterteilung: **12.08.1998**
(21) Anmeldenummer: 95900646.1
(22) Anmeldetag: 21.11.1994
(51) Int. Cl.: B29B 17/02, C10B 53/00, C08J 11/12, A62D 3/00

(54) **VERFAHREN ZUR VERWERTUNG VON ABFALLPOLYMEREN**
PROCESS FOR RECYCLING WASTE POLYMERS
PROCEDE DE RECYCLAGE DE DECHETS POLYMERES

(30) Priorität: 26.11.1993 DE 4340364; 28.04.1994 DE 4414891
(43) Veröffentlichungstag der Anmeldung: 22.11.1995
(73) Patentinhaber: Fischer, Reinhard, D-52074 Aachen (DE); LINDE-KCA-Dresden GmbH, 01067 Dresden (DE)
(72) Erfinder: FISCHER, Reinhard, D-52074 Aachen (DE); MENGES, Georg, D-52072 Aachen (DE); LACKNER, Volker, D-52070 Aachen (DE); DÖLL, Thomas, D-52072 Aachen (DE); MARSCHNER, Siegmar, Dr.-Ing., Dipl.-Ing., D-01129 Dresden (DE)
(74) Vertreter: Kasseckert, Rainer
(86) Internationale Anmeldenummer: DE9401366
(87) Internationale Veröffentlichungsnummer: WO9515244

(56) Entgegenhaltungen:
- EP-A- 0 475 556
- EP-A- 0 554 761
- WO-A-91/18960
- DE-A- 4 235 765
- DATABASE WPI Section Ch, Week 9343, Derwent Publications Ltd., London, GB; Class AEH, AN 93-339086 C43! & JP,A,5 245 463 (AGENCY OF IND. SCI. & TECHN. UND FUJI TEKKU K.K.) 24. September 1993
- PATENT ABSTRACTS OF JAPAN vol. 9, no. 32 (C-265) 9. Februar 1985 & JP,A,59 177 187 (TOSHIROU WATANABE) 6. Oktober 1984
- PE PLAST EUROPE, Nr.3, Juli 1992, MUNICH, DE Seiten 255 - 257 PROF. DR.-ING. GEORG MENGES ET AL. 'PROBLEM-FREE, NATIONWIDE PLASTICS RECYCLING WITHIN A YEAR? - DEGRADATIVE EXTRUSION'
- KUNSTSTOFFE, Bd.84, Nr.7, Juli 1994, MUNCHEN DE Seiten 883 - 886 PROF. DR.-ING. GEORG MENGES ET AL. 'PVC-FEEDSTOCKRECYCLING'
- DATABASE WPI Section Ch, Week 9414, Derwent Publications Ltd., London, GB; Class AHE, AN 94-115421 C14! & JP,A,6 065 585 (HITACHI ZOSEN CORP.) 8. März 1994

## Beschreibung

Die Erfindung betrifft ein Verfahren zum Abtrennen von organisch gebundenen Halogenen aus insbesondere PVC-haltigen Abfall-Kunststoffgemischen mittels thermischer Behandlung in mechanischen Vorrichtungen.

PVC ist ein sehr guter und vielseitig verwendeter Werkstoff, der sich insbesondere für Zwecke des Bauwesens und der Innenausstattung von Gebäuden und Wohnräumen seit Jahrzehnten bewährt hat. Da es sich um Langzeitanwendungen handelt, sind große Mengen an PVC - man schätzt mehr als 12 Mio t nur in der Bundesrepublik - zur Zeit noch in Gebrauch. Diese werden im Laufe der nächsten Jahrzehnte zu einem verstärkten Rückfluß in Form gebrauchter Gegenstände als Abfälle anfallen; ein Abfallstrom, der sich auf eine Menge in der Größenordnung des jährlichen Verbrauches von ca. 1 bis 2 Mio t/a einpendeln wird. Da es sich hierbei um nahezu hundertprozentige PVC-Anteile handelt, könnten diese sortenrein zurückgewonnen werden. Leider steht dem jedoch die Stabilisierung mit einigen Prozent Schwermetallen im Wege, die heute nicht mehr als umweltverträglich angesehen werden, so daß eine werkstoffliche Wiedergewinnung sich deswegen verbietet. Möglich erscheint jedoch ein Abbau bis auf die Molekülebene und eine Wiedergewinnung vor allem des dort mit 56 Massen-% enthaltenen Chlors. Wird dieses dann in die Produktion von Vinylchlorid zurückgeführt, dann kann die Erzeugung neuen Chlors für die PVC-Neuproduktion eingespart werden, die sowohl aus ökologischen Gründen unerwünscht und energetisch und damit auch finanziell aufwendig ist. Es böte sich an, solche Degradationsanlagen somit auf dem Gelände von Vinylchloridherstellern aufzubauen.

Für die Aufarbeitung von Kunststoffabfällen existieren eine Reihe von Verfahren, die in der Literatur ausführlich beschrieben sind, z.B. in "Recycling von Kunststoffen", Carl Hanser Verlag, München 1992.

In der WO 91/18960 ist ein Verfahren zur Verwertung von organischen Abfällen beschrieben, das Einzelheiten der degradativen Extrusion darstellt.

Diese Verfahren befassen sich hauptsächlich mit der Verwertung von Kunststoffabfällen, in denen nur geringe Mengen, bis zu 10%, PVC-Abfälle enthalten sind.

Reine PVC-Abfälle werden durch Umschmelzen wiederverwendet.
Für die stoffliche Verwertung und auch die Verbrennung bereitet der ca. 50 % betragende Salzsäureanteil erhebliche Schwierigkeiten.

Von der BASF wird ein Verfahren betrieben, bei dem reine PVC-Produktionsabfälle mit Sauerstoff bei einer Temperatur von 2000°C verbrannt werden und die dabei freiwerdende Salzsäure zurückgewonnen wird. Es werden nur flüssige oder verflüssigte Produktionsabfälle eingesetzt.

Es ist auch vorgeschlagen worden, PVC mit Luft zu verbrennen und aus den Abgasen Salzsäure durch Auswaschen wiederzugewinnen. Wegen der hohen Salzsäuregehalte im Abgas sind besondere Maßnahmen gegen Korrosion sowohl im Abhitzekessel als auch in der Gasreinigung erforderlich. Außerdem fällt die Salzsäure in der Waschflüssigkeit der Gasreinigung nur sehr verdünnt an und muß durch aufwendige Maßnahmen aufkonzentriert werden. Auch bei der Pyrolyse stört die Salzsäure sehr, so daß bei Kunststoffabfällen mit bis zu 15 % PVC schon vorgeschlagen worden ist, vor der eigentlichen Pyrolyse durch Erhitzen auf 300-400°C das Salzsäuregas abzuspalten (siehe o.a. Literaturstelle, Seite 249).

Demgegenüber hat sich bei der degradativen Extrusion überraschend gezeigt, daß eine fast vollständige Abspaltung der Salzsäure schon bei Temperaturen unter 300°C möglich ist (siehe o.a. Literaturstelle, Seite 311). Bekannt sind Anlagen, die PVC-Anteile in Kunststoffgemischen bis zu 10 % entchloren können; sie wurden in jüngster Zeit auch praktisch für das chemische Recycling von Abfallkunststoffen eingesetzt. Es handelt sich um Rührkesselanlagen. Hier sind jedoch die langen Verweilzeiten im Bereich von Stunden als sehr nachteilig anzusehen. Diese Anlagen sind aber zudem für höhere Gehalte von PVC in den Altkunststoffen nicht geeignet, weil nach einem ganz kurzen Übergang zu einer dünnflüssigen Schmelze das Chlor spontan im Bereich von Temperaturen zwischen 200 und 350°C abgespaltet und der Rest in einen festen koksartigen Rückstand verwandelt wird.

In "Problem-free, Nationwide Plastics Recycling within a Year?", G.Menges et. al., plast europe, July 1992, S. 255-257, ist die degradative Extrusion als Mittel genannt, um gemischten Kunststoffabfall zu einem niedermolekularen Pulver aufzuarbeiten und dieses in einer Raffinerie oder in einer Hydrieranlage zu neuen Kohlenwasserstoffen umzusetzen. Der feste Einsatz wird in einer ersten Extruderstufe auf etwa 300°C erhitzt, dabei verflüssigt und bis auf einen Restchlorgehalt von 0,3 % Chlor oder weniger entgast. Die Salzsäure aus der Entgasung wird mit Natronlauge neutralisiert. Die in der ersten Extruderstufe entstandene enthalogenisierte Schmelze wird in eine zweite Extruderstufe geleitet und unter Zugabe von reaktiven Gasen auf eine Temperatur von 350 bis 550°C erwärmt. Der entstehende Feststoff wird entweder pulverisiert oder bei einer höheren Temperatur vergast und entweder energetisch oder rohstofflich genutzt. Der so behandelte Kunststoffabfall enthält zwischen 5 und 25 % PVC.

Der vorliegenden Erfindung liegt die Aufgabe zugrunde, ein Verfahren der eingangs genannten Art aufzuzeigen, die eine Aufarbeitung von Abfall-Kunststoffgemischen mit höheren Halogengehalten ermöglicht. Weiterhin sollte die Bildung koksartigen Rückstandes berücksichtigt werden.

Diese Aufgabe wird erfindungsgemäß dadurch gelöst, daß Abfall-Kunststoffgemische mit Halogengehalten über 15 % aufgearbeitet werden und die Ansatzbildung von koksartigen Rückständen in den Vorrichtungen verhindert wird.

Das vorgeschlagene Verfahren ermöglicht es, bei Halogen-Gehalten in Kunststoffabfällen über 15 % die Schwierigkeiten, die bei der Verbrennung von PVC-Abfällen durch die hohen Chlorgehalte entstehen, dadurch zur vermeiden, daß Chlor vor der Weiterverarbeitung, z.B. Verbrennung, abgetrennt wird. Außerdem werden Vorrichtungen vorgeschlagen, die das Ansetzen des gebildeten koksartigen Rückstandes verhindern.

Das Verfahren macht sich die Tatsache zunutze, daß die im PVC enthaltene Salzsäure sich bereits bei Temperaturen über 150°C abzuspalten beginnt und daß im Bereich von Temperaturen unter 350°C die Abspaltung fast vollständig ist. Bei ausreichender Verweilzeit lassen sich Restchlorgehalte unter 100 ppm erreichen. Das Verfahren ist nicht nur für chlorhaltige, sondern auch für andere halogenhaltige Polymere geeignet. Da PVC bei höheren Temperaturen durch Zersetzung seiner Bestandteile leicht in einen koksartigen Rückstand übergeführt wird, sieht das vorgeschlagene Verfahren zwei Möglichkeiten der Verarbeitung von PVC-Abfällen oder PVC-haltigen Kunststoffabfällen vor.

### Verfahren 1

Die Abspaltung der Salzsäure erfolgt bei Temperaturen unterhalb 350°C in einem Extruder, dem geeignete Reagenzien zugesetzt werden, wie sie für die degradative Extrusion in der WO 91/18960 genannt worden sind, und zwar Sauerstoff, Wasserstoff, Wasser, Luft, Metalle und Metallverbindungen, einzeln oder in Kombination.

Zur Vermeidung der Bildung von koksartigen Rückständen und zur Erhöhung der Fließfähigkeit können den PVC-Abfällen auch andere, weitgehend halogenfreie, thermoplastische Kunststoffe mit einem Gewichtsanteil über 10 % zugesetzt werden.

Das verflüssigte, von Chlor weitgehend befreite Kunststoffgemisch wird durch eine geeignete Vorrichtung, z.B. eine Düse in einen Brennraum eingebracht und dort verbrannt. Die Verbrennung kann entweder mit Luft oder mit hochprozentigem Sauerstoff erfolgen. Die Verbrennung mit Sauerstoff hat den Vorteil, daß die erforderliche Gasreinigungsanlage wesentlich kleiner ist. Werden doch bei der Verbrennung von PVC mit Luft ca. 8 Nm³ Rauchgase je kg PVC gegenüber ca. 2 Nm³ Rauchgase je kg PVC bei Verwendung von 98-prozentigem Sauerstoff erzeugt. Auch kann beim Verbrennen mit Sauerstoff eine nur partielle Oxidation, ähnlich dem Shell-Verfahren für Erdöl, durchgeführt werden, um Synthesegas oder dergleichen zu erzeugen.

### Verfahren 2

Wie bei Verfahren 1 werden PVC-Abfälle in einen Extruder eingebracht, jedoch wird nach Abspaltung der Salzsäure bei Temperaturen unter 350°C die Temperatur soweit erhöht, daß ein Zersetzen des PVC erfolgt. Das Produkt des Extruders wird in einen Brennraum eingebracht und dort mit Luft oder Sauerstoff, wie im Verfahren 1, verbrannt. Der entstandene koksartige Rückstand kann jedoch auch abgetrennt und beispielsweise für metallurgische Zwecke verwendet werden, da er die in den Kunststoffen enthaltenen Metalle oder Metallverbindungen zurückhält.

Das erfindungsgemäße Verfahren sei an einem Beispiel erläutert.

PVC-Abfälle oder PVC-haltige Kunststoffabfälle werden auf Handtellergröße zerkleinert und mittels einer Stopfvorrichtung einem Extruder aufgegeben. Der Extruder hat im ersten Drittel eine verschließbare Öffnung zur Zufuhr von Sauerstoff oder den anderen genannten flüssigen oder gasförmigen Stoffen, die den Abbau der Polymere beschleunigen. Feste o.g. Metalle oder Metallverbindungen werden in die Stopfvorrichtung eingegeben.

Durch die im Extruder auftretenden Schwerkräfte tritt eine Temperaturerhöhung im Extruder ein. Diese kann durch eine Beheizung des Extruders unterstützt werden. Im Temperaturbereich des Extruders unterhalb 350°C befindet sich eine Öffnung, aus der das abgespaltene HCl Gas abgesaugt und entweder kondensiert oder mit alkalischen oder erdalkalischen Verbindungen neutralisiert wird. Das abgebaute Restprodukt wird in die Düse eines Luft- oder Sauerstoffbrenners eingepreßt und nach üblicher Zerstäubung in einer Brennkammer verbrannt.

Erfolgt die Verbrennung mit Luft, wird die erzeugte Wärmemenge in einem Abhitzekessel ausgenutzt.
Erfolgt die Verbrennung mit Sauerstoff, dann können die erzeugten Rauchgase, ggf. nach Wärmerückgewinnung im Abhitzekessel, je nach partieller oder vollständiger Oxidation, einer weiteren Verwendung zugeführt werden.

Die Art der Gasreinigung richtet sich nach dem Verwendungszweck der Rauchgase, wobei dem Fachmann bekannte Verfahren angewendet werden. Wegen des hohen Vordrucks, den der Extruder erzeugt, kann die Verbrennung auch unter Überdruck erfolgen.

Verfahren 2 unterscheidet sich von dem oben beschriebenen Verfahren nur dadurch, daß hier ausschließlich PVC-Abfälle verwendet werden, und daß nach Abspaltung der Salzsäure die Temperatur soweit erhöht wird, daß das Zersetzen des PVC herbeigeführt wird.
Der Nachteil des Anbackens der koksartigen Rückstände kann dadurch vermieden werden, daß Vorrichtungen verwendet werden, bei denen die Ansätze gleich bei der Entstehung beseitigt werden. Praktische Versuche haben nun ergeben, daß tatsächlich Stempelkneter, kämmende, gleichlaufende Zweischneckenextruder, gegenläufige Doppelschnecken, sowie Drehrohre und Trichter usw. mit einer Abschälvorrichtung in Form von Schabern oder mit einer die Wand abkratzenden Schnecke unter anderem dann funktionieren, wenn die koksartigen Rückstände abgekratzt werden. Am besten haben sich Kneter und dicht kämmende, gleichlaufende Doppelschnecken als geeignet erwiesen.

Es wurden folgende Versuche durchgeführt:
1. In einen laufenden Laborstempelkneter wurde reines Hart-PVC bei verschiedenen Knetertemperaturen zwischen 280° und 360°C Formmasse-Temperatur eingefüllt und jeweils 0,5, 1 und 2 Minuten bearbeitet. Bei 360°C wurde auf die Verweilzeit von 2 min. verzichtet. Der Stempelkneter war mit einer Absaugvorrichtung versehen. Die entstehenden und abgesaugten Gase wurden in der ersten Stufe mittels einer Vakuumpumpe durch eine NaOH-Lösung (20 %ig) und in der danach folgenden zweiten Stufe durch eine Kühlfalle geleitet, die mit flüssigem Stickstoff gekühlt wurde.
   Schon wenige Sekunden nach dem Einfüllen, mit nur geringen Unterschieden bei verschiedenen Knetertemperaturen, konnte an der Rauchbildung und der Erwärmung der Natronlauge das Austreten und Reagieren beobachtet werden. Bei höheren Temperaturen war die Rauchbildung stärker, dauerte aber auch weniger lange an. Eine typische Analyse für ein reines PVC ergab, daß die gebildeten koksartigen Rückstände noch 42 Ma.-% gegenüber der eingewogenen Menge ausmachte, also nahezu das Chlor stöchiometrisch abgetrieben worden ist. In der Absaugleitung vor Eintritt der Gase in die Natronlauge kondensierte eine braune, bei Raumtemperatur zähflüssige Substanz, die als aromatischer Natur analysiert wurde.
   Die gleichen Versuche wurden mit granulierten Alt-PVC-Fensterprofilen, mit Alt-Weich-PVC aus Fußböden und Kabelummantelungen durchgeführt. Während bei den Hart-PVC-Abfällen sich keine Unterschiede gegenüber den vorstehend mitgeteilten Beobachtungen ergaben, fanden wir bei den Weich-PVC-Materialien, daß sich in der Lauge meist in Form von darin schwimmenden Flusen organische Stoffe angesammelt hatten. Auch die Analysen wichen dem höheren Füllstoffgehalt entsprechend von der o.g. Analyse ab.
2. In einem mit gleichlaufenden Schnecken bestückten Labor-Zweischneckenextruder wurden gleiche Versuche durchgeführt. Die Beobachtungen decken sich mit denjenigen in dem Stempelkneter.

Die Versuche führten zu folgenden Ergebnissen:

Die Versuche ergaben, daß solche Anlagen, welche die entstandenen koksartigen Rückstände sofort zertrümmern und sie zu einem Pulver zermahlen, sich für die Praxis wohl am besten eignen werden. Mit den Zweischneckenmaschinen ergaben sich noch weitere Vorteile, weil diese durch die Anbringung von Entgasungsöffnungen an verschiedenen Stellen des Schneckenzylinders erlauben, wenn man ein dementsprechendes Temperaturprogramm entlang dem Schneckenzylinder einstellt, die organischen, früh siedenden Anteile weitgehend vom HCl getrennt abzusaugen, so daß meist eine Reinigung entfallen kann.

Bei den Versuchen hat sich weiterhin gezeigt, daß bei Vorrichtungen mit großen Durchsätzen, insbesondere bei Schneckenextrudern, es erforderlich ist, mit hohen Temperaturen über 300° zu fahren, um die Abspalt-Reaktionen in den relativ kurzen Verweilzeiten abzuschließen.

Es hat sich außerdem gezeigt, daß bei der Verdampfung von Bestandteilen des Polymergemisches, im Falle von PVC werden über 50 % der Masse als Salzsäure abgespalten und verdampft, ein besonders starker Wärmeverbrauch eintritt. Dabei ist es nicht gelungen, wegen der spontan, gleichzeitig eintretenden starken Viskositätsabsenkung des PVC, ausreichend Wärme durch Friktion zuzuführen. Auch eine indirekte Beheizung des Extruders von außen, wie z.B. in der deutschen Patentschrift 2222267 beschrieben ist, brachte wegen der schlechten Wärmeleitfähigkeit des PVC keinen Erfolg.

Auch eine Vorwärmung des Aufgabegutes unmittelbar vor dem Einfüllen in den Extruder konnte das Problem nicht lösen, weil dadurch nämlich lediglich die Zone der Verflüssigung zum Aufgabetrichter vorverlagert wurde, jedoch eine höhere Aufheizung nicht bewirkt werden konnte. Somit konnte auch hierdurch die Deckung der Verdampfungswärme nicht sichergestellt werden.

Es hat sich nun überraschend gezeigt, daß es vorteilhaft ist, die erforderliche Wärme während des Prozesses in dem Zeitpunkt zuzuführen, in dem durch dessen Degradation oder stärkere Vergasung von Bestandteilen des Aufgabeguts, im Falle des PVC der Salzsäure, ein besonderer Wärmeverbrauch eintritt. Da im Extruder der Behandlungsprozeß der Polymere über die Länge des Extruders erfolgt, läßt sich der Ort leicht lokalisieren, an dem die Wärmezufuhr erfolgen soll.

Das gleiche Problem tritt bei der Degradation von Polymeren in großen Extrudern ebenfalls auf und kann gleichartig, wie nachfolgend beschrieben, überwunden werden. Wenn nachstehend vom Extruder gesprochen wird, so ist das nur beispielhaft zu verstehen. Anstelle von Extrudern können auch alle anderen Vorrichtungen verwendet werden, die die oben beschriebenen Eigenschaften aufweisen.
Die Wärmezufuhr kann erfolgen:
1. durch exotherme, chemische Reaktionen
2. durch Wärmeübertrager.

1. Chemische Reaktionen
   a) Zugabe von Reagenzien, die bei bestimmten Temperaturen mit Inhaltsstoffen der Polymere reagieren.
   b) Teilweise Oxidation der Polymere.
2. Wärmeübertrager
   a) Wärmeübertrager, die mit den Polymeren mischbar sind.
   b) Wärmeübertrager, die mit den Polymeren nicht mischbar sind.
      1. Flüssige Wärmeübertrager
      2. Feste Wärmeübertrager
3. Wärmeübertrager, die auch mit den Inhaltsstoffen der Polymere reagieren.

### Zu 1a)

Als Reagenzien sind Stoffe geeignet, die mit in den Polymeren enthaltenen Stoffen Salze bilden.
Dafür kommen Alkalimetalle, Erdalkalimetalle, Metalle und deren Verbindungen in Frage.
Diese Stoffe können bereits bei der Aufgabe des Materials, in möglichst feiner Verteilung, in den Extruder gegeben werden, da ihre Wirkung erst eintritt, wenn bei entsprechender Temperatur die Halogene freigesetzt werden.
Beispielhaft seien genannt: Na₂CO₃, CaO, Ca(OH)₂, Pb, Sn, Bi, Fe.

### Zu 1b)

Durch Luft oder Sauerstoff erfolgt eine teilweise Oxidation der Polymere, wodurch Wärme frei wird.
Beispielhaft seien hier Luft, hochkonzentrierter Sauerstoff oder sauerstoffabgebende Peroxide genannt. Diese Stoffe werden an der Stelle im Extruder zugegeben, wo der größte Wärmebedarf herrscht.

### Zu 2a)

Hier können Öle, z.B. Syncrude oder Vakuumrückstände aus Raffinerien oder andere Abfallöle verwendet werden. Gleichfalls sind verflüssigte Polymere verwendbar. Auch sie werden an der Stelle des größten Wärmebedarfes in den Extruder zugegeben. Da diese Stoffe von den verflüssigten Polymeren nach Verlassen des Extruders nicht getrennt werden können, dürfen sie keine Stoffe enthalten, die bei der späteren Verwendung der verflüssigten oder vergasten Polymere stören.

### Zu 2b1)

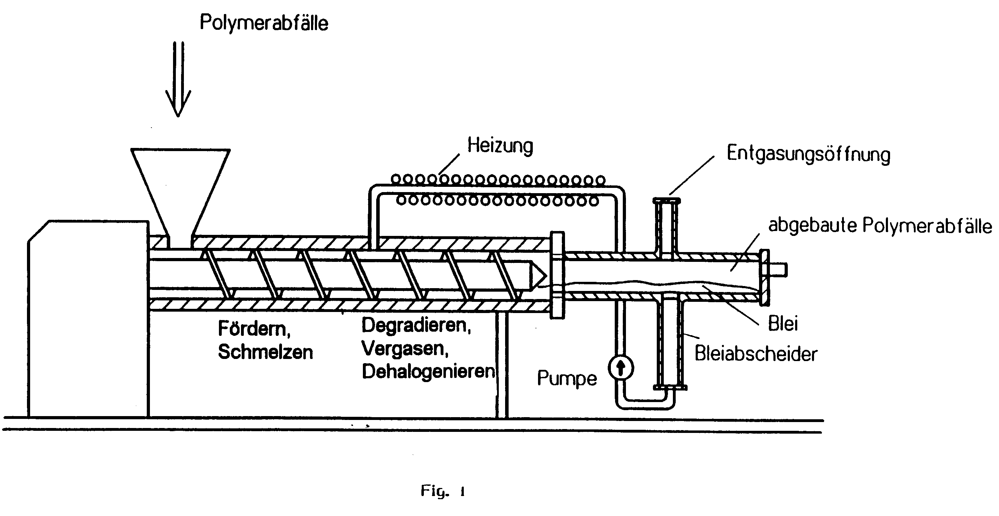

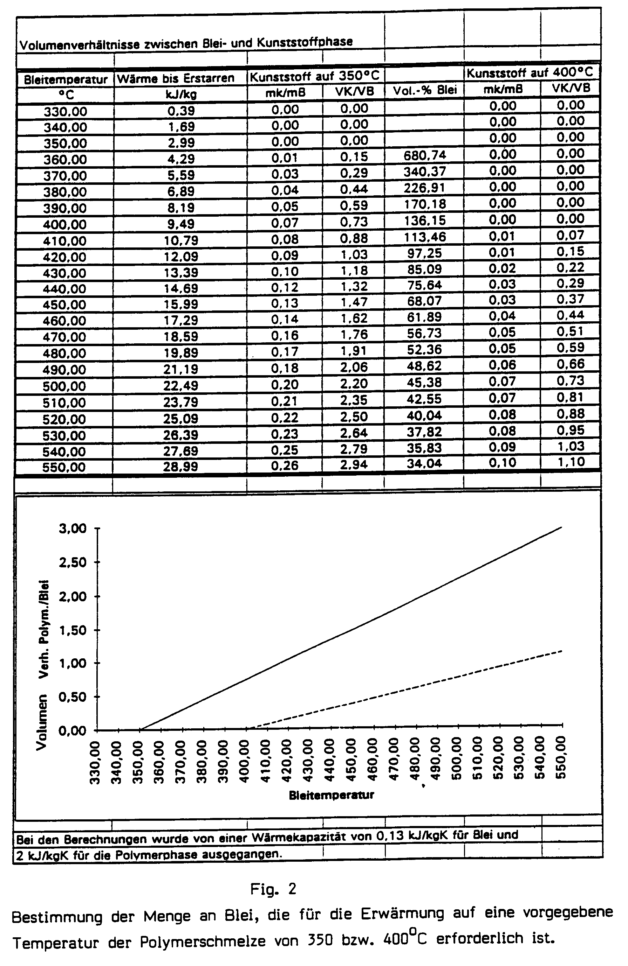

Hier können niedrigschmelzende Metalle oder Legierungen verwendet werden, die bei den im Extruder in der Zone der Degradation oder Gasentwicklung herrschenden Temperaturen flüssig sind. Sie sollten außerdem einen möglichst hohen Siedepunkt haben, damit nicht Teile davon in die Gasphase gelangen.
Beispielhaft seien hier genannt: Pb, Sn, Si.
Diese Metalle können nach Verlassen des Extruders verhältnismäßig einfach durch Schwerkraft von den Polymerschmelzen getrennt werden. Bild 1 zeigt schematisch wie eine solche Vorrichtung aussehen könnte. Der erforderliche Wärmebedarf kann aus Bild 2 abgeschätzt werden.

### Zu 2b2)

Hier können feste Stoffe verwendet werden, die jedoch im Bereich der im Extruder herrschenden Temperaturen so weich sind, daß sie keine Abrasion verursachen.
Beispielhaft seien hier Zink- oder Aluminium-Granalien genannt.
Die unter 2 genannten Stoffe werden hocherhitzt in den Extruder an der Stelle der Degradation oder Gasentwicklung zugegeben.

### Zu 3)

Hier können Metalle wie Pb, Sn, Bi beispielhaft genannt werden, die flüssig und überhitzt an der Stelle der Degradation oder Gasentwicklung in den Extruder gegeben werden und dort ihre fühlbare Wärme abgegeben und gleichzeitig, z.B. bei der Verarbeitung von PVC-Abfällen, mit der entstehenden Salzsäure reagieren.

## Patentansprüche

1. Verfahren zum Abtrennen von organisch gebundenen Halogenen aus insbesondere PVC-haltigen Abfall-Kunststoffgemischen mittels thermischer Behandlung in mechanischen Vorrichtungen, **dadurch gekennzeichnet**, daß Abfall-Kunststoffgemische mit Halogengehalten über 15 % aufgearbeitet werden und die Ansatzbildung von koksartigen Rückständen in den Vorrichtungen verhindert wird.

2. Verfahren nach Anspruch 1, **dadurch gekennzeichnet**, daß die thermische Behandlung bei Temperaturen der Kunststoffgemische zwischen 200°C und 400°C, vorzugsweise bei 300°C bis 350°C, durchgeführt wird.

3. Verfahren nach Anspruch 1 und 2, **dadurch gekennzeichnet**, daß Verweilzeiten von mindestens 30 Sekunden und bis zu 5 Minuten bei der Behandlung eingehalten werden.

4. Verfahren nach einem der Ansprüche 1 bis 3, **dadurch gekennzeichnet**, daß die Behandlung nach einem gestuften Temperaturprogramm abläuft und daß die unterschiedlichen Begleitstoffe hierbei getrennt abgesaugt werden.

5. Verfahren nach einem der Ansprüche 1 bis 4, **dadurch gekennzeichnet**, daß durch die thermische Behandlung in einer mechanischen Vorrichtung bei Temperaturen unterhalb der Temperatur der Bildung von koksartigen Rückständen die Halogene abgespalten werden und durch Zusatz halogenarmer, thermoplastischer Abfallkunststoffe mit einem Gewichtsanteil über 10% die Verflüssigung der Abfallkunststoffe sichergestellt wird.

6. Verfahren nach einem der Ansprüche 1 bis 5, **dadurch gekennzeichnet**, daß dem PVC-haltigen Material die bei der bekannten degradativen Extrusion verwendeten Reagenzien zugesetzt werden.

7. Verfahren nach einem der Ansprüche 1 bis 6, **dadurch gekennzeichnet**, daß das flüssige Produkt der Vorrichtung mittels einer geeigneten Vorrichtung in einen Brennraum eingebracht wird.

8. Verfahren nach einem der Ansprüche 1 bis 7, **dadurch gekennzeichnet**, daß aus PVC zunächst Salzsäure abgespalten wird und nach dem Abspalten der Salzsäure die Temperatur soweit erhöht wird, daß das PVC bis zur Bildung koksartiger Rückstände zerlegt wird.

9. Verfahren nach einem der Ansprüche 1 bis 8, **dadurch gekennzeichnet**, daß der entstehende koksartige Rückstand einer metallurgischen Verwendung zugeführt wird.

10. Verfahren nach Anspruch 1 bis 9, **dadurch gekennzeichnet**, daß aus PVC zunächst Salzsäure abgespalten wird und die Produkte nach Abspaltung der Salzsäure einer geeigneten Brennkammer zugeführt und dort mit Luft oder Sauerstoff partiell oder vollständig oxidiert werden.

11. Verfahren nach Anspruch 10, **dadurch gekennzeichnet**, daß die bei der Oxidation mit hochprozentigem Sauerstoff erzeugten Rauchgase weiterverwendet werden.

12. Verfahren nach Anspruch 10 und 11, **dadurch gekennzeichnet**, daß die Brennkammer so ausgebildet ist, daß der koksartige Rückstand von den Brenngasen durchströmt wird.

13. Verfahren nach einem der Ansprüche 1 bis 8, **dadurch gekennzeichnet**, daß aus PVC zunächst Salzsäure abgespalten wird und die abgespaltene Salzsäure kondensiert wird.

14. Verfahren nach einem der Ansprüche 1 bis 8, **dadurch gekennzeichnet**, daß aus PVC zunächst Salzsäure abgespalten wird und die abgespaltene Salzsäure durch Neutralisation in eine Verbindung übergeführt wird.

15. Verfahren nach einem der Ansprüche 1 bis 8, **dadurch gekennzeichnet**, daß die Vorrichtungen den sich bildenden koksartigen Rückstand von den Anlagenwänden abkratzen.

16. Verfahren nach einem der Ansprüche 1 bis 8, **dadurch gekennzeichnet**, daß die Vorrichtungen den sich bildenden koksartigen Rückstand zermahlen oder zertrümmern und in frei fließendes Pulver umwandeln.

17. Verfahren nach einem der Ansprüche 1 bis 8, **dadurch gekennzeichnet**, daß als Vorrichtungen Schneckenmaschinen mit mindestens einer Entgasungsöffnung entlang des Zylinders eingesetzt werden und diese so beheizt werden, daß durch die Absaugung an den verschiedenen Entgasungsöffnungen die verschiedenen Hilfsstoffe und die Halogenderivate getrennt werden können.

18. Verfahren nach Anspruch 17, **dadurch gekennzeichnet**, daß gleichlaufende, dichtkämmende Zweischneckenmaschinen verwendet werden.

19. Verfahren nach einem der Ansprüche 1 bis 18, **dadurch gekennzeichnet**, daß zur Aufarbeitung von Abfallpolymeren die für die Degradation oder Vergasung von Bestandteilen der Polymerschmelze erforderliche Wärme an der Stelle in den Reaktor zugeführt wird, an dem die Degradation oder Vergasung erfolgt.

20. Verfahren nach Anspruch 19, **dadurch gekennzeichnet**, daß dem Aufgabematerial Stoffe zugegeben werden, die mit den erzeugten Gasen reagieren und dadurch Wärme erzeugen.

21. Verfahren nach Anspruch 20, **dadurch gekennzeichnet**, daß die Stoffe Erdalkalimetalle, Metalle oder ihre Verbindungen sind.

22. Verfahren nach Anspruch 19, **dadurch gekennzeichnet**, daß die Wärme durch teilweise Oxidation der Polymere durch Zuführung von Luft, hochprozentigem Sauerstoff oder von Sauerstoff abgebenden Peroxiden an der Stelle im Reaktor, an der die Vergasung oder Degradation erfolgt, erzeugt wird.

23. Verfahren nach Anspruch 19, **dadurch gekennzeichnet**, daß in den Reaktor an der Stelle, wo die Gase erzeugt werden oder Degradation erfolgt, hocherhitzte Stoffe zugeführt werden, die sich mit Polymeren mischen.

24. Verfahren nach Anspruch 23, **dadurch gekennzeichnet**, daß diese Stoffe Abfallöle, Syncrude, Vakuumrückstand oder verflüssigte Polymere sind.

25. Verfahren nach Anspruch 19, **dadurch gekennzeichnet**, daß in den Reaktor an der Stelle, wo die Degradation oder die Vergasung stattfindet, hocherhitzte flüssige oder feste Stoffe zugeführt werden, die sich mit den Polymeren nicht mischen.

26. Verfahren nach Anspruch 25, **dadurch gekennzeichnet**, daß diese Stoffe niedrigschmelzende Metalle oder Legierungen sind, deren Schmelzpunkt unter der bei der Degradation oder Gasentwicklung im Reaktor herrschenden Temperatur liegt.

27. Verfahren nach Anspruch 25, **dadurch gekennzeichnet**, daß die Stoffe bei der bei der Vergasung oder Degradation im Reaktor herrschenden Temperatur zwar fest, aber so weich sind, daß eine Abrasion vermieden wird.

## Claims

1. Process for removing organically bound halogens from, in particular, PVC-containing waste-plastic mixtures by means of thermal treatment in mechanical apparatuses, characterized in that waste-plastic mixtures having halogen contents above 15% are processed and the encrustation of coke-like residues in the apparatuses is prevented.

2. Process according to Claim 1, characterized in that the thermal treatment is carried out at temperatures of the plastic mixtures between 200°C and 400°C, preferably at 300°C to 350°C.

3. Process according to Claim 1 and 2, characterized in that residence times of at least 30 seconds and up to 5 minutes are maintained in the treatment.

4. Process according to one of Claims 1 to 3, characterized in that the treatment proceeds according to a staged temperature programme and in that the differing minor components are removed separately by suction in this case.

5. Process according to one of Claims 1 to 4, characterized in that the halogens are eliminated by the thermal treatment in a mechanical apparatus at temperatures below the temperature of formation of coke-like residues, and the liquefaction of the waste plastics is ensured by adding low-halogen waste thermoplastics at a content above 10% by weight.

6. Process according to one of Claims 1 to 5, characterized in that the reagents used in the known degradative extrusion are added to the PVC-containing material.

7. Process according to one of Claims 1 to 6, characterized in that the liquid product of the apparatus is introduced into a combustion compartment by means of a suitable apparatus.

8. Process according to one of Claims 1 to 7, characterized in that hydrochloric acid is firstly released from PVC and, after the release of the hydrochloric acid, the temperature is increased until the PVC is decomposed up to the formation of coke-like residues.

9. Process according to one of Claims 1 to 8, characterized in that the coke-like residue formed is supplied for a metallurgical use.

10. Process according to Claims 1 to 9, characterized in that hydrochloric acid is firstly released from PVC and the products, after release of the hydrochloric acid, are fed to a suitable combustion chamber and are there partially or completely oxidized with air or oxygen.

11. Process according to Claim 10, characterized in that the flue gases produced in the oxidation with high-percentage oxygen are reused.

12. Process according to Claim 10 and 11, characterized in that the combustion chamber is constructed in such a manner that the combustion gases flow through the coke-like residue.

13. Process according to one of Claims 1 to 8, characterized in that hydrochloric acid is firstly released from PVC and the released hydrochloric acid is condensed.

14. Process according to one of Claims 1 to 8, characterized in that hydrochloric acid is firstly released from PVC and the released hydrochloric acid is converted by neutralization into a compound.

15. Process according to one of Claims 1 to 8, characterized in that the apparatuses scrape off, from the plant walls, the coke-like residue which forms.

16. Process according to one of Claims 1 to 8, characterized in that the apparatuses grind or disintegrate the coke-like residue which forms and convert it into free-flowing powder.

17. Process according to one of Claims 1 to 8, characterized in that the apparatuses used are screw machines having at least one degassing port along the cylinder and these are heated in such a manner that the various auxiliaries and the halogen derivatives can be separated by the suction at the various degassing ports.

18. Process according to Claim 17, characterized in that co-rotating, tight-sealing twin-screw machines are used.

19. Process according to one of Claims 1 to 18, characterized in that to process waste polymers, the heat required for the degradation or gasification of constituents of the polymer melt is fed into the reactor at the point at which the degradation or gasification proceeds.

20. Process according to Claim 19, characterized in that substances which react with the gases produced and produce heat as a result are added to the charge material.

21. Process according to Claim 20, characterized in that the substances are alkaline earth metals, metals or their compounds.

22. Process according to Claim 19, characterized in that the heat is produced by partial oxidation of the polymers by feeding air, high-percentage oxygen or oxygen-releasing peroxides at the point in the reactor at which the gasification or degradation proceeds.

23. Process according to Claim 19, characterized in that substances heated to high temperature which mix with polymers are added to the reactor at the point where the gases are produced or where degradation proceeds.

24. Process according to Claim 23, characterized in that these substances are waste oils, syncrude, vacuum residue or liquefied polymers.

25. Process according to Claim 19, characterized in that liquid or solid substances heated to high temperature which do not mix with the polymers are added to the reactor at the point where the degradation or the gasification takes place.

26. Process according to Claim 25, characterized in that these substances are low-melting metals or alloys whose melting point is below the temperature prevailing in the reactor during the degradation or gas development.

27. Process according to Claim 25, characterized in that although the substances are solid at the temperature prevailing in the reactor during the gasification or degradation, they are soft enough to avoid abrasion.

## Revendications

1. Procédé de séparation d'halogènes liés organiquement de mélanges résiduels de matières plastiques contenant en particulier du PVC, à l'aide d'un traitement thermique dans des équipements mécaniques, caractérisé en ce que les mélanges de matières plastiques résiduels ayant des teneurs en halogènes supérieures à 15 % sont retraités et que la formation initiale de résidus similaires au coke est empêchée dans les équipements.

2. Procédé selon la revendication 1, caractérisé en ce que le traitement thermique est effectué à des températures des mélanges de matières plastiques comprises entre 200°C et 400°C, de préférence de 300°C à 350°C.

3. Procédé selon les revendications 1 et 2, caractérisé en ce que l'on observe, lors du traitement, des temps de séjour d'au moins 30 secondes et allant jusqu'à 5 minutes.

4. Procédé selon l'une quelconque des revendications 1 à 3, caractérisé en ce que le traitement se déroule conformément à un programme de température par paliers, et que les différentes impuretés d'accompagnement sont en l'occurrence aspirées de manière séparée.

5. Procédé selon l'une quelconque des revendications 1 à 4, caractérisé en ce que les halogènes sont clivés grâce au traitement thermique dans un équipement mécanique à des températures inférieures à la température de formation de résidus similaires au coke, et que la liquéfaction des matières plastiques résiduels est assurée grâce à l'addition de matières plastiques résiduels thermoplastiques, pauvres en halogènes, ayant une proportion en poids au-dessus de 10 %.

6. Procédé selon l'une quelconque des revendications 1 à 5, caractérisé en ce que l'on ajoute au matériau contenant du PVC les réactifs utilisés lors de l'extrusion de dégradation connue.

7. Procédé selon l'une quelconque des revendications 1 à 6, caractérisé en ce que l'on introduit le produit fluide de l'équipement, à l'aide d'un dispositif approprié, dans une chambre de combustion.

8. Procédé selon l'une quelconque des revendications 1 à 7, caractérisé en ce que l'on clive tout d'abord l'acide chlorhydrique du PVC, et qu'après le clivage de l'acide chlorhydrique, l'on augmente la température de telle manière que le PVC soit décomposé jusqu'à la formation de résidus similaires au coke.

9. Procédé selon l'une quelconque des revendications 1 à 8, caractérisé en ce que le résidu similaire au coke qui se forme est acheminé à une utilisation métallurgique.

10. Procédé selon l'une quelconque des revendications 1 à 9, caractérisé en ce que l'on clive tout d'abord l'acide chlorhydrique du PVC et que l'on achemine les produits après clivage de l'acide chlorhydrique vers une chambre de combustion appropriée et que l'on y procède à l'oxydation partielle ou complète à l'aide d'air ou d'oxygène.

11. Procédé selon la revendication 10, caractérisé en ce que l'on utilise ultérieurement les gaz de fumées produits lors de l'oxydation avec de l'oxygène à pourcentage élevé.

12. Procédé selon les revendications 10 et 11, caractérisé en ce que la chambre de combustion est constituée de sorte que le résidu similaire au coke est traversé par les gaz de combustion.

13. Procédé selon l'une quelconque des revendications 1 à 8, caractérisé en ce que l'on clive d'abord l'acide chlorhydrique du PVC et que l'on condense l'acide chlorhydrique clivé.

14. Procédé selon l'une quelconque des revendications 1 à 8, caractérisé en ce que l'on clive tout d'abord l'acide chlorhydrique du PVC et que l'on convertit l'acide chlorhydrique clivé en un composé par neutralisation.

15. Procédé selon l'une quelconque des revendications 1 à 8, caractérisé en ce que les équipements procèdent au grattage du résidu similaire au coke, qui se forme, des parois de l'installation.

16. Procédé selon l'une quelconque des revendications 1 à 8, caractérisé en ce que les équipements broient ou fragmentent le résidu similaire au coke qui se forme et le convertissent en une poudre s'écoulant librement.

17. Procédé selon l'une quelconque des revendications 1 à 8, caractérisé en ce que l'on utilise, en tant qu'équipement, des machines à vis sans fin ayant au moins un orifice de dégazage le long du cylindre, et que l'on chauffe celles-ci de telle manière que, grâce à l'aspiration aux différents orifices de dégazage, l'on puisse séparer les différents adjuvants et les dérivés halogèneés.

18. Procédé selon la revendication 17, caractérisé en ce que l'on utilise des machines à deux vis sans fin, tournant dans le même sens, synchrones.

19. Procédé selon l'une quelconque des revendications 1 à 18, caractérisé en ce que l'on achemine, en vue du retraitement des polymères résiduels, la chaleur nécessaire à la dégradation ou à la gazéification des constituants de la masse fondue polymère à l'endroit dans le réacteur où la dégradation ou la gazéification se produit.

20. Procédé selon la revendication 19, caractérisé en ce que l'on ajoute au matériau de chargement des substances, qui réagissent avec les gaz produits et qui produisent de ce fait de la chaleur.

21. Procédé selon la revendication 20, caractérisé en ce que les substances sont des métaux alcalino-terreux, des métaux ou leurs composes.

22. Procédé selon la revendication 19, caractérisé en ce que l'on produit la chaleur grâce à une oxydation partielle des polymères, par apport d'air, d'oxygène à pourcentage élevé, ou de peroxydes dégageant de l'oxygène, à l'endroit dans le réacteur où la gazéification ou la dégradation se produit.

23. Procédé selon la revendication 19, caractérisé en ce que l'on achemine, dans le réacteur à l'endroit où les gaz sont produits ou la dégradation se produit, des substances surchauffées qui se mélangent aux polymères.

24. Procédé selon la revendication 23, caractérisé en ce que ces substances sont des huiles résiduelles, des bruts synthèse, des résidus de vide ou des polymères liquéfiés.

25. Procédé selon la revendication 19, caractérisé en ce que l'on achemine, dans le réacteur à l'endroit où la dégradation ou la gazéification se produit, des substances liquides ou des substances solides surchauffées qui ne se mélangent pas aux polymères.

26. Procédé selon la revendication 25, caractérisé en ce que ces substances sont des métaux ou des alliages à point de fusion faible, qui se situe en dessous de la température régnant dans le réacteur lors de la dégradation ou lors du dégagement gazeux.

27. Procédé selon la revendication 25, caractérisé en ce que les substances, à la température régnant dans le réacteur lors de la gazéification ou lors de la dégradation, sont certes solides, mais cependant si molles que l'on évite une abrasion.
